Europäisches Patentamt

European Patent Office

Office européen des brevets

(19)

(11) Publication number: **0 073 621**
A1

(12) **EUROPEAN PATENT APPLICATION**

(21) Application number: **82304424.3**

(22) Date of filing: **23.08.82**

(51) Int. Cl.³: **B 60 J 7/06**, B 61 D 39/00

(30) Priority: **28.08.81 GB 8126269**

(43) Date of publication of application: **09.03.83**
Bulletin **83/10**

(84) Designated Contracting States: **BE DE FR NL**

(71) Applicant: **George Neville Truck Equipment Limited,
Lindleys Lane, Kirkby-in-Ashfield Nottingham NG17 8BS
(GB)**

(72) Inventor: **Neville, George Edgar, Cresta Lodge Robin
Down Lane, Mansfield Nottingham (GB)**

(74) Representative: **MacGregor, Gordon et al, ERIC POTTER
& CLARKSON 14 Oxford Street, Nottingham, NG1 5BP
(GB)**

(54) **Vehicle container bodies having sheeting devices.**

(57) The body has an open top covered by a flexible cover (103). An elongate winding member (120) lies on and is fixed along the centre of the cover and has end parts seating on the tops (105) of opposite end walls of the body. The winding member has a handwheel (130) attached to it. At each side of the cover is fixed a tube (124) which guides and controls the end of the cover. Each tube is tied to the body and either side can be released for uncovering. To unvover, the handwheel is turned, so that one half of the cover at one side of the member is wound in superimposition on the other half.

## VEHICLE CONTAINER BODIES HAVING SHEETING DEVICES

The invention relates to a vehicle container body having a sheeting device, i.e. a device which is operable to cover an open top or side of the body with a flexible cover and to uncover the body for loading purposes.

It is known to mount arms pivotally at opposite longitudinal sides of the body of a vehicle, a flexible cover being attached to the arms. The cover is held by a reel in the uncovered position and is unrolled from the reel, to cover the open top of the body, by swinging of the arms. The reel is mounted at the forward longitudinal end of the body and is torsionally biased for winding the cover onto the reel.

It is preferable for the cover to be moved transversely of the body, since this means that the pivoted arms or other device, can be mounted at longitudinal ends of the body, thereby permitting the body to be wider, there being rigid restrictions on the maximum width of body permitted. In addition, the length of cover to be wound or otherwise accommodated, in the covered position would be reduced.

It is not appropriate to use such a winding reel extending lengthwise at one side of the body, since this would either have to project to one side of the body or limit access to the interior of the body. Other arrangements have, therefore, been proposed, such as a device which folds the cover, as shown in U.K. Patent No. 1459645. This device has a framework supporting the cover over the top of the body. It is possible, for suction, created during rapid tipping from the body, or for excessively high heaps of material in the body, to damage the framework.

The present invention provides a vehicle container body having an open top or side and provided with a sheeting device comprising a flexible cover and apparatus for moving the cover for covering and uncovering the body, characterised in that the apparatus comprises a rotatable member which, in the covered position, occupies an intermediate position relative to opposite edge portions of the cover, the member being rotatable movable from the intermediate position towards either one of said edge portions and being arranged so as to wind thereon a first part of the cover from one side of the member in superimposition on a second part of the cover at the opposite side of the member, means for effecting said movement of the member, and means for releasably fixing the opposite edge portions to the body to allow the member to be rotated in either direction by releasing the appropriate edge.

It is preferred that the member extends longitudinally of the body and is movable laterally thereof to uncover the body from laterial side to lateral side, although uncovering from forward side to rearward side or vice versa is also envisaged.

The means for moving the member may be simply a handwheel attached to one end for manual turning of the member. Alternatively, an eye may be provided instead of the handwheel and a pole provided, engageable with the eye, to effect rolling of the member from a remote location with the pole. In a more refined arrangement, the means for moving the member comprises a pair of arms swingable through a gearing arrangement.

Reference is now made to the accompanying drawings, wherein:-

Figure 1 is a perspective view of a vehicle container body with a sheeting device;

Figure 2 is a diagrammatic end view of part of the apparatus shown in Figure 1, illustrating the covered positon;

Figures 3, 4 and 5 are similar views to Figure 2, but showing stages in the uncovering of the body;

Figure 6 is a diagrammatic view of a modification;

Figure 7 is a side elevation of a railway wagon incorporating a sheeting device;

Figure 8 is an end view of the wagon of Figure 7, showing the device in the covering position;

Figure 9 is a view similar to Figure 8, showing the device in an uncovered position;

Figure 10 is a plan view of the wagon in the Figure 9 uncovered state; and

Figure 11 is a diagrammatic end elevation of a vehicle body whose sides are covered by a flexible cover, the sides being uncoverable.

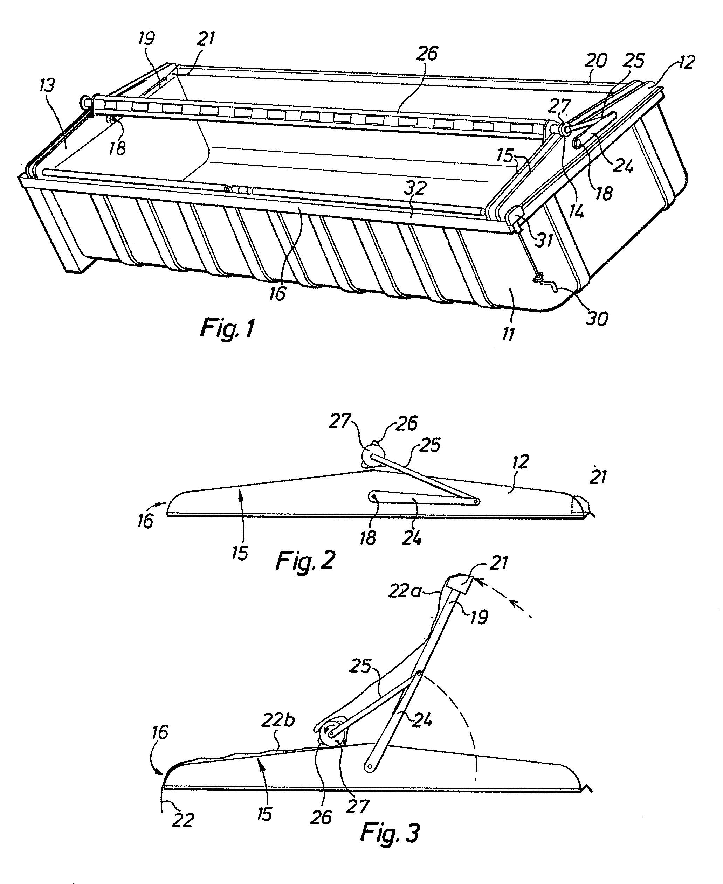

Referring to Figures 1 to 5, the vehicle container body 11 shown is elongate with an open top and at each end is fitted with end frames 12, 13 for supporting a cover over the open top. Each end frame, such as 12, is generally of triangular form, with the apex 14 having a wide obtuse angle. The top of each end frame defines a track 15 sloping downwardly from the apex 14. The cover, not shown in Figure 1, is fixed along one side 16 of the body.

Approximately centrally of each end frame 12, 13, there is journalled, below the apex 14, a shaft 18. An arm 19 is fixed to each shaft and extends (in the covered position shown in Figures 1 and 2) to the opposite side 20 of the body. The free ends of the arms 19 are fixed to a beam 21 which extends along the body. The flexible cover 22 (Figure 3) is attached to beam 21 along its length. As shown in Figure 3, each arm 19 can be pivotally raised, thereby lifting a first part 22a of the cover.

The arms 19 are located internally of the body, i.e. between the end frames 12, 13. Each shaft 18 also carries, externally of the body, a link arm 24, which is fixed relative to the corresponding arm 19. A corresponding link member 25 is pivoted to each link arm 24 in a toggle like arrangement. These link members 25 rotatably mount a winding member 26 therebetween, this winding member 26 being of open framework construction and extending lengthwise of the body. The winding member is supported by rollers 27 which run on the tracks 15 and have high friction peripheral surfaces. The winding member 26 may be tubular and, for example, of circular cross-section.

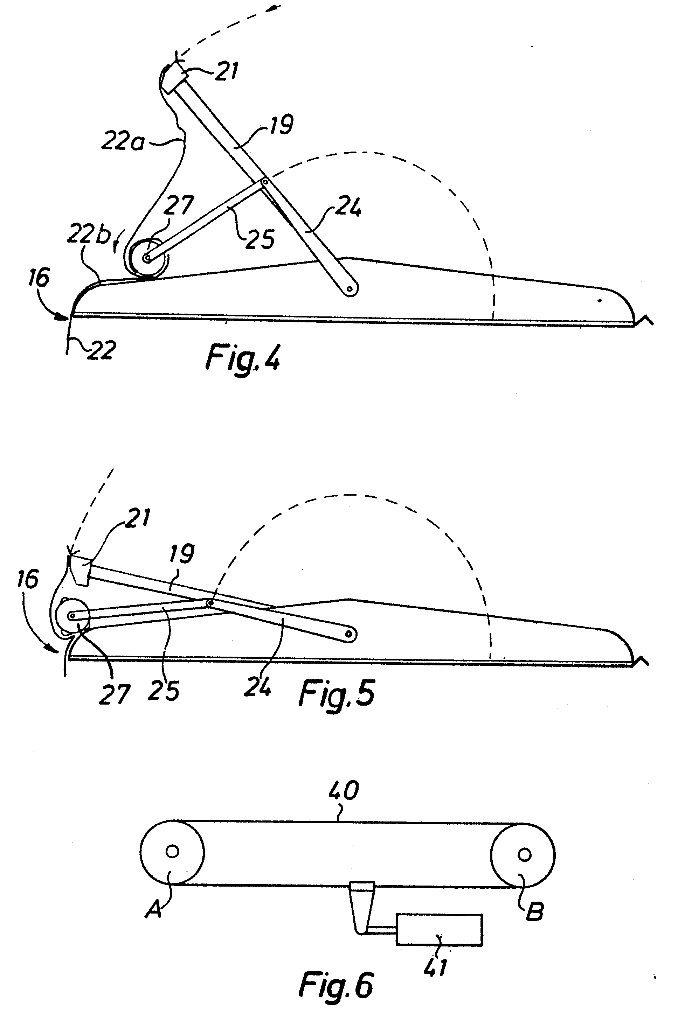

As is apparent from Figure 3, as the arm 19 is raised, the rollers 27 are caused to roll down the tracks 15, being pushed by the linkage 24, 25. The winding member also rotates and starts to pick up the slack in the first part 22a of the cover, this first part being that between the beam 21 of the arm 19 and the winding member 26. As shown in Figures 3 and 4, with further swinging movement of the arm 19, the winding member superimposes this first part 22a of the cover onto the second part 22b, i.e. that between the winding member 26 and the opposite side 16 of the body, and winds the two parts in superimposition onto itself. The uncovered position is illustrated in Figure 5, where the arm 19 has completed its stroke and the cover is substantially fully wound onto the member 26. In this position, the member 26 and the ends 21 of the arms 19 are positioned along the side 16 of the body.

Swinging movement of the arm is effected by means of a handle 30 operating through gear box 31 to turn a synchronising shaft 32. Opposite ends of sychronising shaft 32 are in driving connection with respective shafts 18 at the opposite end of the body so that both shafts 18 are driving in synchronism.

Since the cover 22 lies below the winding member 26, there is no framework to be damaged, if high suction is created, due to sudden load discharge. Also, if the body is overloaded, there is no risk of damage on covering the top, since the winding member 26 will simply be lifted by the load, the rollers being raised off the tracks This state will be obvious, since the cover will not be in the correct place, so that the problem can be remedied. The sheeting device can be of lightweight construction, which is of economic importance, since an increase of weight reduces the pay load which can be carried. The device leaves, in the uncovered position, the whole top of the container body open for easy loading.

Power means may be used to operate the mechanism and one example is shown in Figure 6. In this example a cable 40 passes over two pulleys A, B spaced transversely of the body, the pulley A replacing the gear box 31 (see Figure 1). The cable has turns (not shown) which serve to rotate the shaft 32 as the cable is moved. Any power or manual means may be used to drive the cable, e.g. the piston-cylinder unit 41 shown.

It is possible for the drive means to be omitted and other means attached to the winding member to effect rotation. For example, by pushing or pulling on the winding member at one end, the member may be caused to roll. This may be done through the agency of a pole. For example, an eye may be fixed at one, or each, end of the member for engagement by a hook on a pole, the hook being joined to the pole by a

-5-

universal joint.

The winding member may operate longitudinally of the body, instead of laterally.

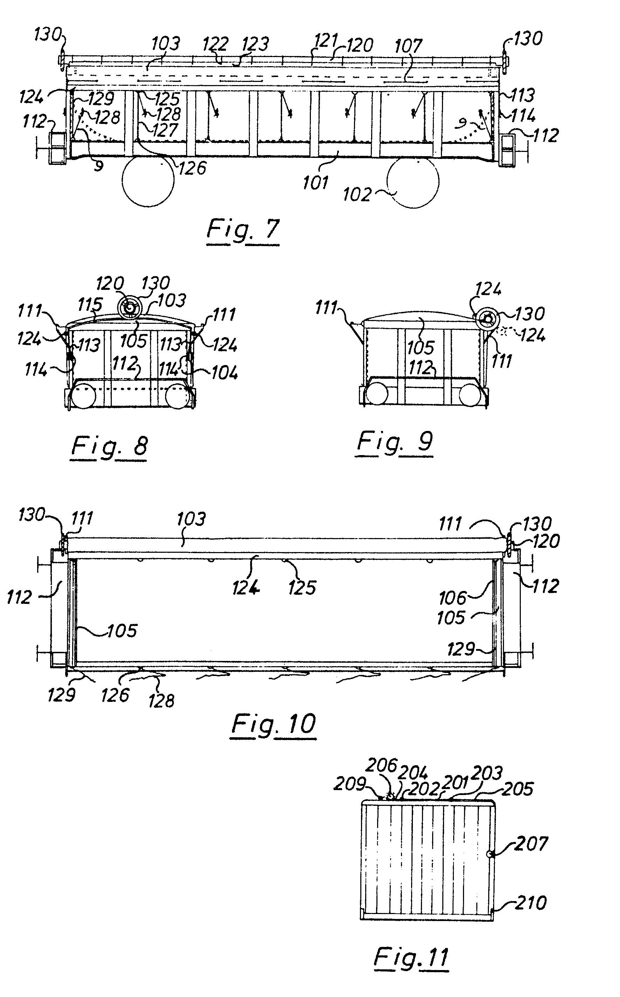

Referring now to Figures 7 to 10, a railway wagon is shown having a body constructed with a modified sheeting device. Such a device may be used, however, on a road vehicle body.

The wagon has a body 101 supported on wheels 102. The body has an open top closable by a flexible cover 103. Each end wall 104 of the body is provided with an end frame 105 having a convexly arcuate transverse top surface, with a correspondingly shaped rebated shoulder 106 (Figure 10) on the internal side. The shoulder is engaged by the cover 103 and is radiussed to assist sealing between the cover and the shoulder. The cover 103 extends beyond each end frame 105 and has a rope 113 engaged in a sleeve 115 in each transverse end. The ends of each rope 113 are pulled taut in the covered position and attached to cleats 114 at opposite sides of the respective end wall 104.

A winding member 120 is cylindrical and extends longitudinally of the body from end frame to end frame, with its axis on a longitudinal median plane through the wagon, in the covered position. The member 120 lies on top of the cover 103 and is secured to the cover by means of resilient ties 121 extending through eyelets 122 in a strip 123 attached to the cover.

Each longitudinal edge of the cover 103 is laced, or otherwise attached, to a respective reinforcing member in the form of an elongate tube 124. Each tube has eyes 125 spaced therealong, each corresponding to a respective eye 126 on the body. Ropes 127 are fixed to all of the eyes 126 on the body, except the end ones at each side of the body. These ropes pass through the corresponding eyes 125 on the tubes 124 and are fastened to cleats 128 on the body. At each end of each tube 124, a rope 129 is attached to the eye 125 on the tube and passes through the eye 126 on the body to be attached to a corresponding cleat 128.

At each end of the wagon, the winding member 120 carries a handwheel 130, these handwheels serving to locate the winding member longitudinally. A platform 112 allows access to the handwheel at each end of the wagon. Support brackets 111 are provided for the winding member in each of two possible uncovered positions at the longitudinal sides of the wagon.

Tension in the cover can be improved, in the covered position, by drawing taut longitudinally extending ropes 107 laced in the cover and fastening the ends to cleats (not shown).

The cover can be unwound from either longitudinal side according to choice. At one side of the wagon, the laced rope 107 is released as are the ropes 113 near that side at each end of the wagon from the cleats 114. The ropes 127 and 129 are then released from the cleats 128 at that side.

One of the handwheels 130 is then turned to rotate the winding member 120 to wind up the cover as described with respect to the embodiment of Figures 1 to 5, until the winding member, together with the wound cover, is received in the brackets 111 on the opposite side from where the ropes were unfastened. This position is illustrated in Figures 9 and 10. The free tube 124 may be moved manually to the position shown in dash lines in Figure 9 should it be obstructive to loading.

To recover the wagon body, it is only necessary to pull on the untied end ropes 129 and then to recleat the ropes previously released.

The tubes 124 prevent the cover from getting into the interior of the body.

Referring now to Figure 11, this shows how the invention can be applied to opening the sides of a vehicle body. In this case, the top of the body is closed along a central longitudinal portion by a cover part 201 fixed between longitudinal struts 202, 203. Flexible cover parts 204, 205 extend respectively from the struts 202, 203 to cover the remainder of the top and sides of the body. In Figure 11, the cover part 205 is in the covering position and the opposite part 204 in the uncovering position.

Intermediate the opposite longitudinal edges 202, 209 and 203, 210 of each flexible cover part 204, 205, is secured a winding member 206, 207 respectively. The member occupies a position approximately mid-way down the respective side of the vehicle, in the covering position, as shown on the right of Figure 11. This prevents billowing of the cover parts, which is a common problem with conventional cover arrangements.

Each winding member can be rotated to wind up the corresponding cover part, as disclosed for the other embodiments, and as shown on the left of Figure 11.

CLAIMS

1. A vehicle container body (101) having an open top or side and provided with a sheeting device comprising a flexible cover (103) and apparatus for moving the cover for covering and uncovering the body, characterised in that the apparatus comprises a rotatable member (120) which, in the covered position, occupies an intermediate position relative to opposite edge portions (124) of the cover (103), the member being rotatably movable from the intermediate position towards either one of said edge portions and being arranged so as to wind thereon a first part of the cover from one side of the member in superimposition on a second part of the cover at the opposite side of the member, means (130) for effecting said movement of the member, and means (107) for releasably fixing the opposite edge portions (124) to the body to allow the member to be rotated in either direction by releasing the appropriate edge.

2. A vehicle container body according to Claim 1, wherein the member extends longitudinally of the body.

3. A vehicle container body according to Claim 2, wherein the member (120) is supported on opposite end walls (105) of the body and is attached to the cover (103) along the length of the member.

4. A vehicle container body according to Claim 3, wherein the winding member is freely supported on said end walls so as to be capable of riding over obstructions in the body and extending above the end walls.

5. A vehicle container body according to Claim 1, 2, 3 or 4, wherein the edge portions of the cover are releasably fastened to the body by ropes (107, 113, 127, 129).

0073621

6.    A vehicle container body according to Claim 5, constructed so that the cover can be returned to the covering position by pulling on selected ones of said ropes (127, 129).

7.    A vehicle container body according to any preceding claim, wherein said means for effecting movement of the member comprises a handwheel or handle (130) attached or attachable to an end of the member.

0073621

Fig. 1

Fig. 2

Fig. 3

**Fig. 4**

**Fig. 5**

**Fig. 6**

130  103  122  123  121  120  107  130
124  129  125
112  128
127
9  126
101  102
113
114
112

*Fig. 7*

120  130
111  115  103  111
124  113  105  113  124
114  112  114  104

*Fig. 8*

111  124
130
124
105  111
112

*Fig. 9*

130  111  103  111  130
120
112  124  125  112
106
105  105
129
129  126  128

*Fig. 10*

206  204
209  202  201  203
205
207
210

*Fig.11*

| | DOCUMENTS CONSIDERED TO BE RELEVANT | | EP 82304424.3 |
|---|---|---|---|

| Category | Citation of document with indication, where appropriate, of relevant passages | Relevant to claim | CLASSIFICATION OF THE APPLICATION (Int. Cl. 3) |
|---|---|---|---|
| A | US - A - 2 976 082 (DAHLMAN)<br>* Fig. 4 *<br>-- | 1-5,7 | B 60 J 7/06<br>B 61 D 39/00 |
| A | US - A - 3 423 126 (GALVIN et al.)<br>* Claim 1; fig. 3 *<br>-- | 1-3 | |
| A | US - A - 4 225 175 (FREDIN)<br>-- | | |
| D,A | GB - B - 1 459 645 (G. NEVILLE TRUCK)<br>-- | | |
| P | GB - A - 2 084 241 (G. NEVILLE TRUCK)<br>---- | | |
| | | | TECHNICAL FIELDS SEARCHED (Int. Cl. 3) |
| | | | B 60 J 7/00<br>B 60 P 7/00<br>B 61 D 39/00<br>B 65 D 88/00<br>B 65 D 90/00 |

| X | The present search report has been drawn up for all claims | | |
|---|---|---|---|
| | Place of search<br>VIENNA | Date of completion of the search<br>09-12-1982 | Examiner<br>MELZER |